# EUROPEAN PATENT SPECIFICATION

(11) **EP 3 767 940 B1**
(45) Date of publication and mention of the grant of the patent: **12.03.2025**
(21) Application number: 19767858.4
(22) Date of filing: 06.03.2019
(51) Int. Cl.: H04N 23/00

(54) **LENS MOUNT, LENS MODULE, AND ELECTRONIC DEVICE**
LINSENHALTERUNG, LINSENMODUL, UND ELEKTRONISCHE VORRICHTUNG
SUPPORT DE LENTILLE, MODULE DE LENTILLE, ET DISPOSITIF ÉLECTRONIQUE

(30) Priority: 16.03.2018 CN 201810219940
(43) Date of publication of application: 20.01.2021
(73) Proprietor: Vivo Mobile Communication Co., Ltd., Dongguan, Guangdong 523860 (CN)
(72) Inventor: LI, Wenzhen, Dongguan, Guangdong 523860 (CN)
(74) Representative: Lavoix
(86) International application number: PCT/CN2019/077087
(87) International publication number: WO 2019/174500

(56) References cited:
- WO-A1-2017/072525
- CN-A- 101 533 141
- CN-A- 106 131 435
- CN-A- 106 444 219
- CN-A- 106 990 551
- CN-A- 107 645 624
- CN-A- 108 600 608
- US-A1- 2007 280 668
- US-A1- 2009 231 537
- US-A1- 2016 212 332
- US-A1- 2017 289 455
- US-A1- 2017 324 905
- US-B1- 9 681 052

## Description

### TECHNICAL FIELD

Embodiments of the present disclosure relate to the field of optical technology, and in particular to a lens mount, a lens module and an electronic device.

### BACKGROUND

With the development of optical technology, many electronic devices have shooting functions. When a user uses an electronic device, such as a camera or a mobile phone, to capture an image, any shakiness in the user's hand can cause the electronic device to shake, resulting in blurred images captured by the electronic device.

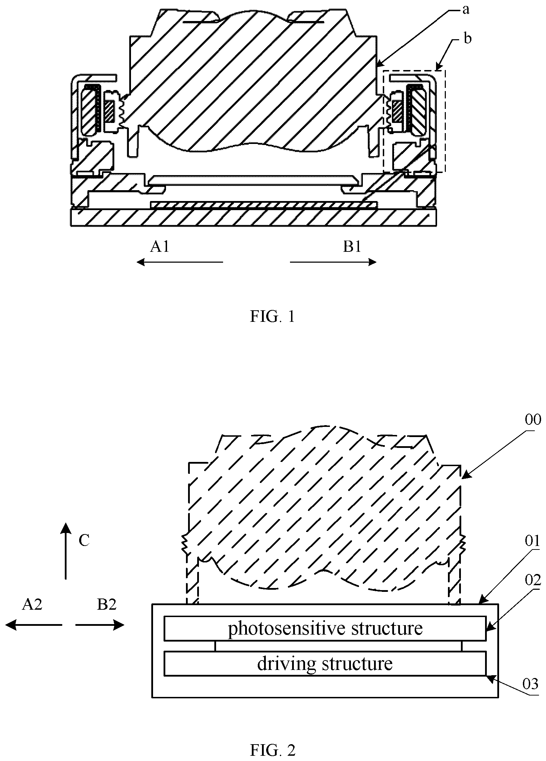

At present, a voice coil motor can be installed in the electronic device and enable the voice coil motor to drive a lens of the electronic device to move, thereby reducing an impact of the shaking of the electronic device on the clarity of the captured image (this function can be called optical image stabilization). For example, as shown in FIG. 1, a lens a is secured to a voice coil motor b, and when an outside force is exerted on the lens, it will move in a direction perpendicular to a direction of an optical axis of the lens a (e.g., a direction A1 or B1 as shown in FIG. 1). At this time, the electronic device can control the voice coil motor b to drive the lens a to move in an opposite direction (e.g., the direction B1 or A1 as shown in FIG. 1) to the above direction. In this way, optical image stabilization can be achieved.

However, the voice coil motor be installed in the electronic device to drive the lens to move, the lens may vibrate slightly which may reduce the reliability of the lens that is usually a precision member.

WO 2017/072525 A1 discloses a camera assembly including a support structure and an image sensor mounted on a carrier that is suspended on the support structure.

US 2009/231537 A1 discloses a lens unit fixed inside a lens barrel frame of a lens unit and being provided with a liquid crystal lens.

US 2016/212332 A1 discloses a system for super-resolution imaging using 3-axis optical image stabilization.

US 2017/289455 A1 discloses a camera module disposed in an electronic device, including a base, a holder, an image sensor, a bottom, and a first biasing element.

US 9681052 B1 discloses a system related to optical image stabilization in mobile computing devices that include multiple optical element sets.

### SUMMARY

The scope of the present invention is determined only by the appended claims. More precisely, in one aspect, the present disclosure provides a lens mount according to claim 1 and further detailed in the dependent claims referring back to this claim.

Furthermore, in yet another aspect, the present disclosure provides a lens module according to claim 12 and further detailed in the dependent claim referring back to this claim.

Furthermore, in still yet another aspect, the present disclosure provides an electronic device according to claim 14.

### BRIEF DESCRIPTION OF THE DRAWINGS

FIG. 1 is a sectional view of a lens module provided in related art;
FIG. 2 is a first sectional view of a lens mount provided by an embodiment of the disclosure;
FIG. 3 is a second sectional view of a lens mount provided by another embodiment of the disclosure;
FIG. 4 is a third sectional view of a lens mount provided by a further embodiment of the disclosure;
FIG. 5 is a fourth sectional view of a lens mount provided by a still further embodiment of the disclosure;
FIG. 6 is a fifth sectional view of a lens mount provided by still yet another embodiment of the disclosure;
FIG. 7 is a sectional view of a lens module provided by an embodiment of the disclosure.

### Description of reference numerals in the drawings:

00-lens; 01-lens mount; 02-photosensitive structure; 03-driving structure;
04-first wiring board; 05-connecting member; 06-deformable member;
07-second wiring board; 08-photosensitive member; 09-filter; 10-support structure; 11-lens module

### DETAILED DESCRIPTION

The technical solutions in the embodiments of the present disclosure will be described clearly and completely with reference to the accompanying drawings in the embodiments of the present disclosure. Obviously, the described embodiments are a part, rather than all, of the embodiments of the present disclosure Based on the embodiments in the present disclosure, all the other embodiments obtained by those of ordinary skill in the art without creative work shall fall within the scope of protection of the present disclosure as defined by the appended claims.

A term "and/or" herein refers to an association relationship that describes associated objects, and means that there may be three relationships. For example, A and/or B may mean the following three cases: A exists alone, both A and B exist, and B exists alone. The symbol "/" herein represents a "or" relationship of the associated objects. For example, A/B means A or B.

The terms "first", "second" and the like in the specification and claims of the present disclosure are used to distinguish different objects, rather than to describe a specific order of the objects. For example, the first displacement and the second displacement are used to indicate different displacements, rather than to describe a specific order of the displacements.

In the embodiments of the present disclosure, words such as "exemplarily" or "for example" are used to introduce examples, exemplifications, or illustrations. Any embodiment or design solution introduced by means of such words "exemplarily" or "for example" in the present disclosure should not be construed as being more preferable or advantageous than the other embodiments or design solutions. To be precise, the words such as "exemplarily" or "for example" are intended to present a relevant concept in a concrete manner.

In the description of the embodiments of the present disclosure, a phrase "a plurality of" means a number of two or more, unless otherwise specified. For example, a plurality of lens elements means two or more lens elements, and a plurality of photodiodes means two or more photodiodes.

Some terms/nouns involved in the embodiments of the present disclosure will be explained below.

A voice coil motor: a device that uses an interaction between magnetic poles in a magnetic field from a permanent magnet and a magnetic field generated by an energized coil conductor to produce regular movement, that is, a power device that can convert electrical energy into mechanical energy.

A lens: an optical device composed of a plurality of lens elements.

An optical axis of the lens: a line connecting centers of the plurality of lens elements in the lens.

Optical image stabilization: a function of reducing an impact of shakiness in a user's hand on the clarity of a captured image when the user is capturing the image using an electronic device having an image capturing function, by providing a special structure in the electronic device.

A shape memory alloy (Shape Memory Alloy, SMA): an alloy material that can eliminate its deformation generated at a lower temperature and restore its original shape after being heated to make its temperature increased, that is, an alloy with a "memory" effect.

A rigid-flex board: a wiring board having characteristics of both a flexible wiring board and a rigid wiring board, formed by combining the flexible wiring board and the rigid wiring board which have been subjected to lamination or other processes, according to relevant process requirements.

A filter: an optical device used to select a required radiation band.

Embodiments of the present disclosure provide a lens mount, a lens module, and an electronic device. The lens mount can be configured to carry a lens. The lens mount can include a photosensitive structure and a driving structure arranged on a first side, distal to the lens, of the photosensitive structure and connected to the photosensitive structure. The driving structure can be configured to drive the photosensitive structure to move a second displacement (a direction of the second displacement is in a same plane as and opposite to the direction of the first displacement) if the photosensitive structure moves a first displacement (a direction of the first displacement is perpendicular to a direction of an optical axis of the lens). With such a solution, on one hand, when the photosensitive structure in the lens mount moves the first displacement under the effect of an outside force, the driving structure in the lens mount can drive the photosensitive structure to move in the direction opposite to the direction of the first displacement, so that the lens mount of this embodiment of the present disclosure can achieve optical image stabilization. On the other hand, the embodiment of the present disclosure achieves the optical image stabilization by the driving structure which drives the photosensitive structure to move and thus will not affect the lens, as compared with the related art in which the optical image stabilization is achieved by the voice coil motor which drives the lens to move. Therefore, the embodiment of the present disclosure can ensure the reliability of the lens while achieving the optical image stabilization.

As shown in FIG. 2, an embodiment of the present disclosure provides a lens mount 01. The lens mount 01 can be configured to carry a lens 00, and includes a photosensitive structure 02, and a driving structure 03 arranged on a first side of the photosensitive structure 02 and connected to the photosensitive structure 02, and the first side of the photosensitive structure 02 is distal to the lens 00.

The driving structure 03 can be configured to drive the photosensitive structure 02 to move a second displacement when the photosensitive structure 02 moves a first displacement in a direction which is perpendicular to a direction of an optical axis of the lens 00. Moreover, a direction of the second displacement is in a same plane as and opposite to the direction of the first displacement.

Exemplarily, as shown in FIG. 2, assuming that the direction of the optical axis of the lens 00 is indicated as C, then the direction of the first displacement may be indicated as A2, and the direction of the second displacement may be indicated as B2. It will be understood that the first displacement may be a distance that the photosensitive structure 02 moves in the direction A2, and the second displacement may be a distance that the photosensitive structure 02 moves in the direction B2.

Specifically, in the embodiments of the present disclosure, when an outside force is exerted on the lens mount (for example, the user can click on a shooting control on a screen of the electronic device to which the lens mount is applied to capture images or videos, and in the capturing process, the shakiness in the user's hand, (the user's hand holding the electronic device), may cause the electronic device to shake, so that an outside force is exerted on the lens mount), the photosensitive structure in the lens mount may move a distance in the direction perpendicular to the direction of the optical axis of the lens (the photosensitive structure moves the first displacement). In the case that the photosensitive structure moves the first displacement, the driving structure may drive the photosensitive structure to move in a direction which is in a same plane as and opposite to the direction of the first displacement (the photosensitive structure moves the second displacement), so that the clarity of the captured images or videos can be improved, and the optical image stabilization can be achieved.

Optionally, in the embodiment of the present disclosure, magnitudes of the first displacement and the second displacement may be the same or different, and this can be based on actual needs, and is not limited in the embodiment of the present disclosure. It will be understood that, the magnitudes of the first displacement and the second displacement may be the same in order to better achieve the optical image stabilization; in addition, the magnitudes of the first displacement and the second displacement may be different since there may be a certain deviation between the magnitudes of the first displacement and the second displacement in practical applications.

With the lens mount provided by the embodiment of the present disclosure, on one hand, when the photosensitive structure in the lens mount moves the first displacement under the effect of an outside force, the driving structure in the lens mount can drive the photosensitive structure to move in the direction opposite to the direction of the first displacement, so that the lens mount of this embodiment of the present disclosure can achieve optical image stabilization. On the other hand, the embodiment of the present disclosure achieves the optical image stabilization by the driving structure which drives the photosensitive structure to move and thus will not affect the lens, as compared with the related art in which the optical image stabilization is achieved by the voice coil motor which drives the lens to move. Therefore, the embodiment of the present disclosure can ensure the reliability of the lens while achieving the optical image stabilization.

Optionally, in the embodiment of the present disclosure as shown in FIG. 2, the driving structure 03 can be further configured to drive the photosensitive structure 02 to move along a first direction, which is the same as the direction of the optical axis of the lens. Specifically, the driving structure can drive the photosensitive structure to move in the first direction under the control of a control signal.

Exemplarily, the first direction may be indicated as C as shown in FIG. 2.

Specifically, in the embodiment of the present disclosure, during the process of taking photos or videos, the driving structure may receive a control signal sent by a processor (for example, the control signal may be a signal sent by the processor to adjust a focal length of the lens (that is, to adjust an object distance and an image distance), and under the control of the control signal, the driving structure drive the photosensitive structure to move along the direction of the optical axis of the lens (that is, the first direction), so that optical focusing of the lens can be achieved.

Optionally, in the embodiment of the present disclosure, the driving structure can drive the photosensitive structure to move away from the lens along the direction of the optical axis of the lens (that is, the first direction), or the driving structure may drive the photosensitive structure to move towards the lens along the direction of the optical axis of the lens (that is, the first direction). When the driving structure drives the photosensitive structure to move away from the lens along the direction of the optical axis of the lens, the focal length can be increased; and when the driving structure drives the photosensitive structure to move towards the lens along the direction of the optical axis of the lens, the focus length can be reduced. A specific direction in which the photosensitive structure is driven to move can be based on actual needs, and it is not limited in the embodiment of the present disclosure.

With the lens mount provided by the embodiments of the present disclosure, on one hand, the driving structure can drive the photosensitive structure to move along the direction of the optical axis of the lens (that is, the first direction), so that the object distance and the image distance can be changed to make the taken image of the object clearer, thereby achieving optical focusing. On the other hand, the embodiment of the present disclosure achieves the optical focusing by the driving structure which drives the photosensitive structure to move, and thus will not affect the lens, as compared with the related art in which the optical focusing is achieved by the voice coil motor which drives the lens to move. Thus, the embodiment of the present disclosure can ensure the reliability of the lens while achieving the optical focusing.

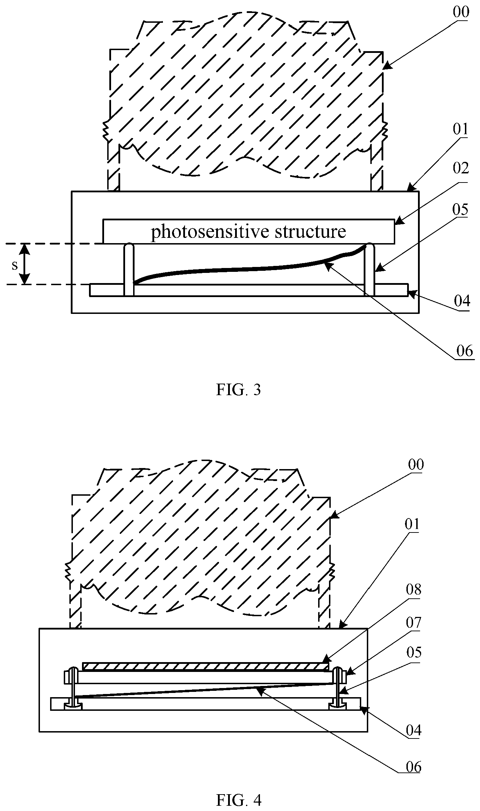

Optionally, with reference to FIG. 3 and in conjunction with FIG. 2, in the lens mount 01 provided by the embodiment of the present disclosure, the driving structure 03 shown in FIG. 2 may include a first wiring board 04, M connecting members 05, and N deformable members 06. Each connecting member 05 has a first end connected to the first wiring board 04, and a second end connected to the photosensitive structure 02. The N deformable members 06 are all located between the first wiring board 04 and the photosensitive structure 02, and each deformable member 06 has a first end connected to the first wiring board 04, and a second end connected to the photosensitive structure 02.

When the photosensitive structure 02 moves the first displacement, at least one of the N deformable members 06 drives the photosensitive structure 02 to move the second displacement after being heated, M is an integer greater than 1, and N is a positive integer.

When an outside force is exerted on the lens mount, the photosensitive structure in the lens mount moves a distance in a direction perpendicular to the direction of the optical axis of the lens (the photosensitive structure moves the first displacement). At this time, the processor can acquire data of the first displacement (for example, the processor can acquire the data of the first displacement through a motion sensor provided on the photosensitive structure), and calculate an amount of displacement that needs to be compensated for based on the data of the first displacement, and determine, from the N deformable members, at least one deformable member that can drive the photosensitive structure to move the second displacement after being heated. Then, the processor is controlled to energize the at least one deformable member, so that the at least one deformable member is deformed (that is, a shape change occurs) after being energized to generate heat, so as to drive the photosensitive structure to move the second displacement.

It should be noted that each of the drawings illustrated in the embodiments of the present disclosure is a sectional view of a structure (for example, a sectional view of a lens mount or of a lens module, etc.). In each of the sectional views, two connecting members (i.e. M=2) and one deformable member (i.e., N=1) are illustrated. In actual implementations, the numbers of the connecting members and the deformable members can be based on actual needs, and they are not limited in the embodiment of the present disclosure.

Of course, it can be understood that the numbers, shapes, and the like of the members in the sectional views illustrated in the embodiments of the present disclosure are all recited by way of example, and do not impose any limitation on the embodiments of the present disclosure. In actual implementations, the numbers, shapes and the like of the members in the sectional views can be based on actual needs, and are not limited in the embodiments of the present disclosure.

Optionally, in the embodiment of the present disclosure, the first wiring board may be a flexible circuit board, or a rigid circuit board, or a rigid-flex board. Specifically, it can be based on actual needs, and is not limited in the embodiment of the present disclosure.

Optionally, in the embodiments of the present disclosure, the materials of the M connecting members may be metals, metal alloys or other materials, can be based on actual needs, and are not limited in the embodiments of the present disclosure. For example, the materials of the M connecting members may be metallic titanium.

Optionally, in the embodiments of the present disclosure, the materials of the M connecting members may be all the same, may be all different, or may be partially the same. They can be based on actual needs, and are not limited in the embodiments of the present disclosure.

Optionally, in the embodiments of the present disclosure, at least one of the N deformable members can drive the photosensitive structure to move along the direction of the optical axis of the lens (i.e., the first direction) after being heated.

With the lens mount provided by the embodiments of the present disclosure, firstly, when the photosensitive structure in the lens mount moves the first displacement under the effect of an outside force, at least one of the N deformable members in the lens mount can drive the photosensitive structure to move in a direction opposite to the direction of the first displacement after being heated, so that the lens mount of the embodiment of the present disclosure can achieve optical image stabilization. Secondly, the embodiment of the present disclosure achieves the optical image stabilization by the driving structure which drives the photosensitive structure to move and thus will not affect the lens, as compared with the related art in which the optical image stabilization is achieved by the voice coil motor which drives the lens to move. Furthermore, the embodiment of the present disclosure adopts a thermal deformation of the at least one deformable member to drive the photosensitive structure to move, and the power consumption of the thermal deformation of the at least one deformable member to drive the photosensitive structure to move is much less than the power consumption of the voice coil motor to drive the lens to move, and the embodiments of the present disclosure can thus reduce the power consumption as compared with the related art which adopts the voice coil motor to drive the lens to move. Thus, the embodiments of the present disclosure can not only ensure the reliability of the lens, but also reduce the power consumption, while achieving the optical image stabilization.

Optionally, in the embodiment of the present disclosure as shown in FIG. 3, a gap between the first wiring board 04 and the photosensitive structure 02 may be greater than or equal to a preset value.

Exemplarily, in the embodiment of the present disclosure, the gap between the first wiring board and the photosensitive structure may be s as shown in FIG. 3.

Exemplarily, in the embodiment of the present disclosure, the preset value may be any value in an interval from 0.05 mm (millimeter) to 0.08 mm. Of course, the preset value may be any other value that meets actual needs, and it is not limited in the embodiment of the present disclosure.

Since a gap is provided between the first wiring board and the photosensitive structure in the lens mount provided by the embodiments of the present disclosure, when the photosensitive structure is moved along the direction of the first displacement, the direction of the second displacement, or the first direction, it will not contact with the first wiring board, so that the lens mount can operate normally.

Optionally, in the embodiment of the present disclosure, the deformable member may be a memory alloy member. For example, each of the N deformable members may be a memory alloy member.

Optionally, in the embodiment of the present disclosure, the material of the memory alloy member may be a shape memory alloy. Of course, the material of the memory alloy member may be any other material that meets actual needs, and it is not limited in the embodiment of the present disclosure.

Optionally, when the materials of the memory alloy members are shape memory alloys, the shape memory alloys may be any one, or a combination of two or more of gold-cadmium alloys, silver-cadmium alloys, copper-zinc alloys, copper-zinc-aluminum alloys, copper-zinc-tin alloys, copper-tin alloys, copper-zinc-gallium alloys, indium-titanium alloys, gold-copper-zinc alloys, iron-platinum alloys, titanium-niobium alloys, uranium-niobium alloys, and iron-manganese-silicon alloys.

Optionally, in the embodiment of the present disclosure, the materials of the N deformable members may be any one, or a combination of two or more of the aforementioned shape memory alloys, and the materials of the N deformable members may be all the same, may be all different, or may be partially the same, and they can be based on actual needs, and are not limited in the embodiments of the present disclosure.

Exemplarily, in the embodiment of the present disclosure, assuming that the N deformable members are N shape memory alloy wires, then each of the shape memory alloy wires is located between the first wiring board and the photosensitive structure. Moreover, one end of each shape memory alloy wire is connected to the first wiring board, and the other end of the shape memory alloy wire is connected to the photosensitive structure. If the photosensitive structure moves the first displacement, each shape memory alloy wire can drive the photosensitive structure to move the second displacement after being heated (the direction of the second displacement is in a same plane as and opposite to the direction of the first displacement, and the magnitude of the first displacement can be equal to that of the second displacement).

With the lens mount provided by the embodiments of the present disclosure, if the photosensitive structure moves the first displacement under the effect of the external force, the photosensitive structure can be driven by the memory alloy member to move a second displacement in a direction which is in a same plane as and opposite to the direction of the first displacement, so as to achieve optical image stabilization. Since the cost of the memory alloy member is lower than the cost of the voice coil motor, the embodiments of the present disclosure can reduce the production cost while achieving optical image stabilization.

Optionally, with reference to FIG. 4 and in conjunction with FIG. 3, in the lens mount 01 provided by the embodiment of the present disclosure, the photosensitive structure 02 shown in FIG. 3 may include a second wiring board 07 and a photosensitive member 08 arranged on the second wiring board 07. The first side of the photosensitive structure 02 is a side of the second wiring board 07 that is opposite to the photosensitive member 08. The second end of each connecting member 05 and the second end of each deformable member 06 are connected to the second wiring board 07.

Optionally, in the embodiment of the present disclosure, the second wiring board may be a flexible circuit board, a rigid circuit board, or a rigid-flex board. Specifically, it can be based on actual needs, and is not limited in the embodiment of the present disclosure.

Optionally, in the embodiment of the present disclosure, the photosensitive member may be bonded to the second wiring board with glue. Of course, the photosensitive member can be provided on the second wiring board in any other possible way, which is not limited in the embodiment of the present disclosure.

Optionally, in the embodiment of the present disclosure, the photosensitive member may be a photosensitive chip. The photosensitive chip may be a charge-coupled device (Charge-Coupled Device, CCD) chip, a complementary metal-oxide semiconductor (Complementary Metal-Oxide Semiconductor, CMOS) chip, or any other member that is photosensitive. In actual implementations, it can be based on actual needs, and is not limited in the embodiment of the present disclosure.

Exemplarily, it is assumed that the above-mentioned photosensitive member is a CCD chip and a plurality of photodiodes is arranged on a surface of the CCD chip. When light in an external environment passes through the lens and hits the surface of the CCD chip, the photodiodes on the surface of the CCD chip can sense the light and convert it into an analog electrical signal. The analog electrical signal can be then processed by a sampling amplifier circuit and an analog-to-digital conversion circuit, so that the analog electrical signal is converted into a digital image signal. Of course, the digital image signal can be compressed and stored in a storage device (for example, a flash memory or a built-in hard disk card, etc.) within the electronic device. Reference can be made to relevant methods for storage in the related art for a specific method for storage, which will not be described in detail in the embodiment of the present disclosure.

The lens mount provided by the embodiment of the present disclosure is capable of converting the optical image collected by the lens into an image signal through the second wiring board and the photosensitive member provided on the second wiring board.

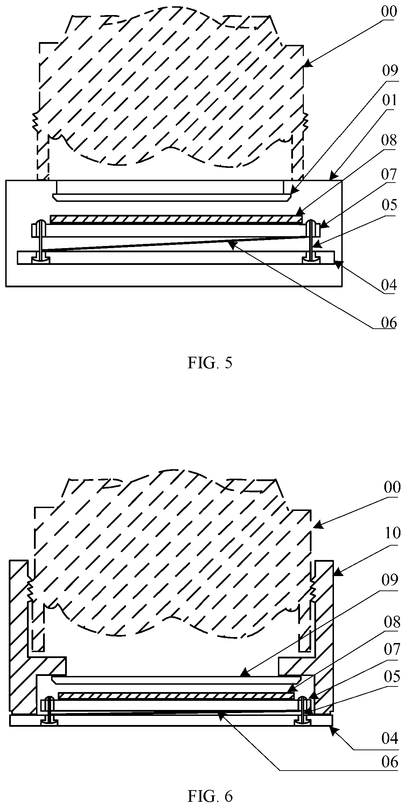

Optionally, with reference to FIG. 5 and in conjunction with FIG. 4, the lens mount 01 provided by the embodiment of the present disclosure may further include a filter 09 provided on a second side of the photosensitive structure, which is a same side of the second wiring board 07 where the photosensitive member 08 is located.

It should be noted that in the embodiment of the present disclosure, the filter allows light of a predetermined wavelength to be transmitted through, that is, the filter can be used to filter light of wavelengths other than the predetermined wavelength.

Exemplarily, in the embodiment of the present disclosure, the filter may be a visible light pass filter, an ultraviolet light pass filter, an infrared light pass filter, or the like. For example, assuming that the filter is a visible light pass filter, when light in the external environment of the lens passes through the lens elements in the lens to reach the visible light pass filter, the visible light pass filter can absorb light of wavelengths other than visible wavelengths. As a result, the visible light can pass through the filter and reach the second wiring board of the photosensitive structure. Assuming that the filter is an ultraviolet light pass filter, when the light in the external environment of the lens passes through the lens elements in the lens to reach the ultraviolet light pass filter, the ultraviolet light pass filter can absorb light of wavelengths other than ultraviolet wavelengths. As a result, the ultraviolet light can pass through the filter and reach the second wiring board of the photosensitive structure. Assuming that the filter is an infrared light pass filter, when the light in the external environment of the lens passes through the lens elements in the lens to reach the infrared light pass filter, the infrared light pass filter can absorb light of wavelengths other than the infrared wavelengths. As a result, the infrared light can pass through the filter and reach the second wiring board of the photosensitive structure.

It should be noted that, a larger gap is illustrated in FIGS. 3, 4, and 5 in the embodiments of the present disclosure in order to show the gap between the first wiring board and the photosensitive structure more clearly. In actual implementations, it can be based on actual needs, and is not limited in the embodiment of the present disclosure.

In the lens mount provided by the embodiment of the present disclosure, a filter is provided on the second side of the photosensitive structure, and when the light in the external environment of the lens passes through the lens elements in the lens to reach the filter, the filter can allow the light of the predetermined wavelength to pass through and absorb the light of wavelengths other than the predetermined wavelength, so that the photosensitive structure can convert the light of the predetermined wavelength in the optical image into an image signal.

Optionally, with reference to FIG. 6 and in conjunction with FIG. 5, the lens mount provided by the embodiment of the present disclosure may further include a support structure 10, which may be used to support the lens 00 and secure the filter 09.

Optionally, in the embodiment of the present disclosure, the support structure may be embodied by a structure 10 as shown in FIG. 6 (for example, the structure 10 may be a bracket), or may be embodied by a combination of two substructures (for example, one substructure is used to support the lens, and the other is used to secure the filter, and these two substructures can be bonded together to form a support structure). A specific support structure can be based on actual needs, and it is not limited in the embodiments of the present disclosure.

It should be noted that, in the drawings provided in the embodiments of the present disclosure, a size of the gap between the first wiring board and the photosensitive structure is recited by way of example. In actual implementations, the size of the gap between the first wiring board and the photosensitive structure can be based on actual needs, and it is not limited in the embodiment of the present disclosure.

In the lens mount provided in the embodiments of the present disclosure, the support structure provided on the lens mount can support the lens and secure the filter. Also, the support structure can further seal and protect the first wiring board, the second wiring board, the M connecting members, the N deformable members and the photosensitive member.

It can be understood that in the above-mentioned lens mount in the embodiment of the present disclosure as shown in any one of FIGS. 2 to 6, since the lens mount is used to carry the lens 00, and the lens 00 is not part of the lens mount, the lens 00 in the lens mount shown in any one of FIGS. 2 to 6 is indicated by a dotted line.

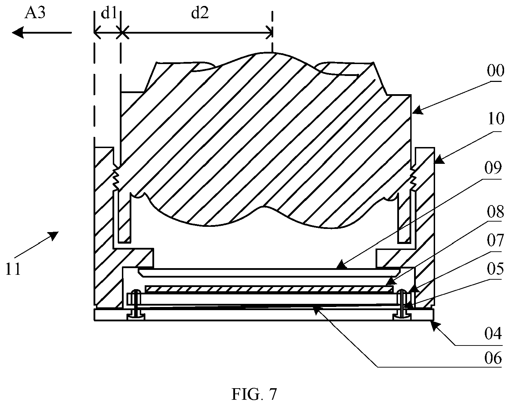

As shown in FIG. 7, an embodiment of the present disclosure provides a lens module 11. The lens module 11 may include a lens 00, and a lens mount which can be used to carry the lens 00. The lens mount may include a first wiring board 04, a connecting member 05, a deformable member 06, a second wiring board 07, a photosensitive member 08, a filter 09, and a support structure 10. Reference can be made to relevant description in the above-mentioned embodiments for the specific description of the lens mount, which will not be described in detail here.

It should be noted that FIG. 7 is an exemplary illustration in which the lens mount shown in FIG. 6 described in the foregoing embodiment is incorporated as an example. In actual implementations, the lens module provided by the embodiment of the present disclosure may be implemented in combination with the lens mount shown in any one of FIGS. 2 to 5. For the description of this lens mount, reference can be made to the relevant description of the lens mount shown in any one of FIGS. 2 to 6, and it will not be described in detail here.

Optionally, in the embodiment of the present disclosure, the lens and the lens mount may be provided with matching threads which can be used to secure the lens to the lens mount.

An embodiment of the present disclosure provides a lens module, which includes a lens and a lens mount for carrying the lens. On one hand, when the photosensitive structure in the lens mount moves the first displacement under the effect of an outside force, the driving structure in the lens mount can drive the photosensitive structure to move in the direction opposite to the direction of the first displacement, so that the lens module of this embodiment of the present disclosure can achieve optical image stabilization. On the other hand, the embodiment of the present disclosure achieves the optical image stabilization by the driving structure which drives the photosensitive structure to move and thus will not affect the lens, as compared with the related art in which the optical image stabilization is achieved by the voice coil motor which drives the lens to move. Therefore, the embodiment of the present disclosure can ensure the reliability of the lens while achieving the optical image stabilization.

Optionally, as shown in FIG. 7, the lens mount provided by the embodiment of the present disclosure may include a support structure 10, and a radius of the lens module in a second direction (for example, a direction A3 as shown in FIG. 7) is a sum of a radius of the lens 00 and a thickness of the support structure 10 in the second direction. The second direction is perpendicular to the direction of the optical axis of the lens.

It should be noted that in the embodiment of the present disclosure, the second direction A3 shown in FIG. 7 may be the same as, or different from, the direction of the first displacement A2 shown in FIG. 2. Or, the second direction A3 shown in FIG. 7 may be the same as, or different from, the direction of the second displacement B2 shown in FIG. 2. Specifically, the second direction A3, the direction of the first displacement A2, the direction of the second displacement B2, and the direction of the optical axis of the lens (e.g., which may be the first direction C shown in FIG. 2) are all recited by way of example, and they are not limited in the embodiment of the present disclosure. In actual implementations, they can be based on actual needs, and are not limited in the embodiment of the present disclosure.

Exemplarily, assuming that the radius of the lens module in the second direction shown in FIG. 7 is denoted as D, the radius of the lens 00 is denoted as d2 as shown in FIG. 7, and the thickness of the support structure 10 in the second direction is denoted as d1 as shown in Figure 7, then D=d1+d2.

It should be noted that in the related art, a radius of the lens module in the second direction is a sum of a radius of the lens and a thickness of the voice coil motor in the second direction, and the thickness of the voice coil motor in the second direction includes a thickness of the lens carrier and the coil, a thickness of the magnet securing bracket, a thickness of the magnet, the gap between the lens carrier and the magnet securing bracket, an anti-shake translation gap, and the thickness of the voice coil motor. However, in the embodiment of the present disclosure, the radius of the lens module in the second direction is the sum of the radius of the lens and the thickness of the support structure in the second direction. Since the thickness of the support structure in the second direction is much smaller than the thickness of the voice coil motor in the second direction, the lens module provided by the embodiment of the present disclosure can reduce the radius of the lens module in the second direction as compared with the related art.

Exemplarily, in the embodiment of the present disclosure, the thickness of the support structure in the second direction may be generally 0.25 mm, while the thickness of the magnet in the voice coil motor provided in the related art is generally from 0.3 mm to 0.35 mm. Obviously, the thickness of the support structure in the second direction in the embodiment of the present disclosure is much smaller than the thickness of the voice coil motor in the second direction in the related art. That is, the lens module provided by the embodiment of the present disclosure can reduce the radius of the lens module in the second direction as compared with the related art.

In the lens module provided by the embodiment of the present disclosure, the radius of the lens module in the second direction is the sum of the radius of the lens and the thickness of the support structure in the second direction, and the thickness of the support structure in the second direction (i.e., a direction perpendicular to the direction of the optical axis of the lens) is usually much smaller than the thickness of the voice coil motor in the second direction in the related art. Therefore, the lens module in the embodiment of the present disclosure can reduce the radius of the lens module in the second direction, thereby reducing the side of the lens module in the second direction, as compared with the related art in which the radius of the lens module in the second direction is the sum of the lens and the thickness of the voice coil motor in the second direction.

An embodiment of the present disclosure provides an electronic device. The electronic device may include a lens module. For the description of the lens module, reference may be made to relevant description of the lens module in the above-mentioned embodiment, and the detailed description will not be given here.

Optionally, in the embodiment of the present disclosure, the electronic device may be a mobile terminal, such as a mobile phone, a camera, a camcorder, a tablet computer, a notebook computer, a handheld computer, an in-vehicle terminal, a wearable device, an ultra-mobile personal computer (Ultra-Mobile Personal Computer, UMPC), a netbook, a personal digital assistant (Personal Digital Assistant, PDA), etc. Specifically, it can be based on actual needs, and it is not limited in the embodiment of the present disclosure.

An embodiment of the present disclosure provides an electronic device, which may include a lens module, and the lens module may include a lens and a lens mount for carrying the lens. On the one hand, when the photosensitive structure in the lens mount moves the first displacement under the effect of an outside force, the driving structure in the lens mount can drive the photosensitive structure to move in the direction opposite to the direction of the first displacement, so that the electronic device of this embodiment of the present disclosure can achieve optical image stabilization. On the other hand, the embodiment of the present disclosure achieves the optical image stabilization by the driving structure which drives the photosensitive structure to move and thus will not affect the lens, as compared with the related art in which the optical image stabilization is achieved by the voice coil motor which drives the lens to move. Therefore, the embodiment of the present disclosure can ensure the reliability of the lens while achieving the optical image stabilization.

It should be noted that the terms "comprising", "including" or any other variants thereof herein are intended to indicate a non-exclusive inclusion, so that a process, method, item or device including a series of elements includes not only these elements, but also other elements not explicitly listed, or elements inherent to the process, method, item, or device. Without more restrictions, the element defined by the sentence "including a..." do not exclude the existence of other identical elements in the process, method, item or device that includes the elements.

The embodiments of the present disclosure are described above with reference to the accompanying drawings, but the present disclosure is not limited to the above-mentioned specific embodiments. The above-mentioned specific embodiments are only illustrative and not restrictive. The scope of protection of the present invention is defined by the appended claims.

## Claims

1. A lens mount (01), configured to carry a lens (00) and comprising a photosensitive structure (02) and a driving structure (03) arranged on a first side, distal to the lens (00), of the photosensitive structure (02) and connected to the photosensitive structure (02),
wherein the driving structure (03) comprises a first wiring board (04), M connecting members (05), and N deformable members (06), each of M connecting members (045) has a first end connected to the first wiring board (04), and a second end connected to the photosensitive structure (02);
wherein the N deformable members (06) are all located between the first wiring board (04) and the photosensitive structure (02);
the lens mount (01) being **characterized in that**
the driving structure (03) is configured to drive the photosensitive structure (02) to move a second displacement through at least one of said N deformable members (06) being energized to generate heat for thermal deformation of said at least one of said N deformable members, the photosensitive structure (02) moves a first displacement due to shaking in a direction perpendicular to a direction of an optical axis of the lens (00), a direction of the second displacement being in a same plane as and opposite to the direction of the first displacement, where N is a positive integer.

2. The lens mount (01) according to claim 1, wherein the driving structure (03) is further configured to drive the photosensitive structure (02) to move along a first direction, which is the same as the direction of the optical axis of the lens (00), and a magnitude of the first displacement is the same as that of the second displacement.

3. The lens mount (01) according to claim 1, wherein M is an integer greater than 1.

4. The lens mount (01) according to claim 1 or 3, wherein a gap between the first wiring board (04) and the photosensitive structure (02) is greater than a preset value.

5. The lens mount (01) according to claim 1 or 3, wherein a gap between the first wiring board (04) and the photosensitive structure (02) is equal to a preset value.

6. The lens mount (01) according to claim 1 or 3, wherein the deformable member (06) is a memory alloy member.

7. The lens mount (01) according to claim 1 or 3, wherein the photosensitive structure (02) comprises a second wiring board (07) and a photosensitive member (08) arranged on the second wiring board (07), and the first side of the photosensitive structure (02) is a side of the second wiring board (07) opposite to the photosensitive member (08).

8. The lens mount (01) according to claim 7, wherein the second end of each connecting member (05) and the second end of each deformable member (06) are connected to the second wiring board (07).

9. The lens mount (01) according to claim 7 or 8, further comprising a filter (09) provided on a second side of the photosensitive structure (02), which is a same side of the second wiring board (07) where the photosensitive member (08) is located.

10. The lens mount (01) according to claim 9, further comprising a support structure (10) configured to support the lens (00) and secure the filter (09).

11. The lens mount (01) according to claim 10, wherein a thickness of the support structure (10) in the direction perpendicular to the direction of the optical axis of the lens (00) is approximately 0.25 mm.

12. A lens module (11), **characterized by** comprising a lens (00) and the lens mount (01) according to any one of claims 1 to 11 and configured to carry the lens (00).

13. The lens module (11) according to claim 12, wherein the lens mount (01) comprises a support structure (10), and a radius of the lens module (11) in a second direction is a sum of a radius of the lens (00) and a thickness of the support structure (10) in the second direction, the second direction being perpendicular to the direction of the optical axis of the lens (00).

14. An electronic device, **characterized by** comprising the lens module (11) according to claim 12 or 13.

## Patentansprüche

1. Linsenhalterung (01), die konfiguriert ist, um eine Linse (00) zu tragen, und umfassend eine lichtempfindliche Struktur (02) und eine Antriebsstruktur (03), die auf einer ersten, von der Linse (00) distalen Seite der lichtempfindlichen Struktur (02) angeordnet und mit der lichtempfindlichen Struktur (02) verbunden ist,
wobei die Antriebsstruktur (03) eine erste Leiterplatte (04),
M Verbindungselemente (05) und N verformbare Elemente (06) umfasst, wobei jedes der M Verbindungselemente (045) ein erstes Ende, das mit der ersten Leiterplatte (04) verbunden ist, und ein zweites Ende, das mit der lichtempfindlichen Struktur (02) verbunden ist, aufweist;
wobei sich alle N verformbaren Elemente (06) zwischen der ersten Leiterplatte (04) und der lichtempfindlichen Struktur (02) befinden;
wobei die Linsenhalterung (01) **dadurch gekennzeichnet ist, dass**
die Antriebsstruktur (03) konfiguriert ist, um die lichtempfindliche Struktur (02) anzutreiben, um eine zweite Verlagerung durch mindestens eines der
N verformbaren Elemente
(06) zu bewirken, die erregt werden, um Wärme zur thermischen Verformung des mindestens einen der N verformbaren Elemente zu erzeugen, wenn die lichtempfindliche Struktur (02) eine erste Verlagerung aufgrund von Erschütterung in einer Richtung senkrecht zu einer Richtung einer optischen Achse der Linse (00) bewegt, wobei eine Richtung der zweiten Verlagerung in einer gleichen Ebene wie und entgegengesetzt zu der Richtung der ersten Verlagerung ist, wobei N eine positive ganze Zahl ist.

2. Linsenhalterung (01) nach Anspruch 1, wobei die Antriebsstruktur (03) ferner konfiguriert ist, um die lichtempfindliche Struktur (02) anzutreiben, um sich entlang einer ersten Richtung zu bewegen, die mit der Richtung der optischen Achse der Linse (00) übereinstimmt, und eine Größe der ersten Verlagerung gleich ist wie die der zweiten Verlagerung.

3. Linsenhalterung (01) nach Anspruch 1, wobei M eine ganze Zahl größer als 1 ist.

4. Linsenhalterung (01) nach Anspruch 1 oder 3, wobei ein Abstand zwischen der ersten Leiterplatte (04) und der lichtempfindlichen Struktur (02) größer ist als ein voreingestellter Wert.

5. Linsenhalterung (01) nach Anspruch 1 oder 3, wobei ein Abstand zwischen der ersten Leiterplatte (04) und der lichtempfindlichen Struktur (02) gleich ist wie ein voreingestellter Wert.

6. Linsenhalterung (01) nach Anspruch 1 oder 3, wobei das verformbare Element (06) ein Gedächtnislegierungselement ist.

7. Linsenhalterung (01) nach Anspruch 1 oder 3, wobei die lichtempfindliche Struktur (02) eine zweite Leiterplatte (07) und ein lichtempfindliches Element (08), das auf der zweiten Leiterplatte (07) angeordnet ist, umfasst und die erste Seite der lichtempfindlichen Struktur (02) eine Seite der zweiten Leiterplatte (07) gegenüber dem lichtempfindlichen Element (08) ist.

8. Linsenhalterung (01) nach Anspruch 7, wobei das zweite Ende von jedem Verbindungselement (05) und das zweite Ende von jedem verformbaren Element (06) mit der zweiten Leiterplatte (07) verbunden sind.

9. Linsenhalterung (01) nach Anspruch 7 oder 8, ferner umfassend einen Filter (09), der auf einer zweiten Seite der lichtempfindlichen Struktur (02) bereitgestellt ist, die dieselbe Seite der zweiten Leiterplatte (07) ist, auf der sich das lichtempfindliche Element (08) befindet.

10. Linsenhalterung (01) nach Anspruch 9, ferner umfassend eine Stützstruktur (10), die konfiguriert ist, um die Linse (00) zu stützen und den Filter (09) zu befestigen.

11. Linsenhalterung (01) nach Anspruch 10, wobei eine Stärke der Stützstruktur (10) in der Richtung senkrecht zu der Richtung der optischen Achse der Linse (00) etwa 0,25 mm ist.

12. Linsenmodul (11), **dadurch gekennzeichnet, dass** es eine Linse (00) und die Linsenhalterung (01) nach einem der Ansprüche 1 bis 11 umfasst, die zum Tragen der Linse (00) konfiguriert ist.

13. Linsenmodul (11) nach Anspruch 12, wobei die Linsenhalterung (01) eine Stützstruktur (10) umfasst und ein Radius des Linsenmoduls (11) in einer zweiten Richtung eine Summe aus einem Radius der Linse (00) und einer Stärke der Stützstruktur (10) in der zweiten Richtung ist, wobei die zweite Richtung senkrecht zu der Richtung der optischen Achse der Linse (00) ist.

14. Elektronische Vorrichtung, die **dadurch gekennzeichnet ist, dass** sie das Linsenmodul (11) nach Anspruch 12 oder 13 umfasst.

## Revendications

1. Support de lentille (01), configuré pour porter une lentille (00) et comprenant une structure photosensible (02) et une structure d'entraînement (03) disposée sur un premier côté, distal par rapport à la lentille (00), de la structure photosensible (02) et reliée à la structure photosensible (02),
dans lequel la structure d'entraînement (03) comprend une première carte de câblage (04), M éléments de connexion (05) et N éléments déformables (06), chacun des M éléments de connexion (045) présentant une première extrémité connectée à la première carte de câblage (04) et une seconde extrémité connectée à la structure photosensible (02) ;
dans lequel les N éléments déformables (06) sont tous situés entre la première carte de câblage (04) et la structure photosensible (02) ;
le support de lentille (01) étant **caractérisé en ce que** :
la structure d'entraînement (03) est configurée pour entraîner la structure photosensible (02) afin d'effectuer un second déplacement à travers au moins l'un desdits
N éléments déformables
(06) alimentés pour générer de la chaleur en vue de la déformation thermique de l'un au moins desdits N éléments déformables, si la structure photosensible (02) subit un premier déplacement dû aux secousses dans une direction perpendiculaire à la direction d'un axe optique de la lentille (00), la direction du second déplacement étant dans le même plan que la direction du premier déplacement et opposée à celle-ci, où N est un nombre entier positif.

2. Support de lentille (01) selon la revendication 1, dans lequel la structure d'entraînement (03) est en outre configurée pour entraîner la structure photosensible (02) à se déplacer le long d'une première direction, qui est la même que la direction de l'axe optique de la lentille (00), et une amplitude du premier déplacement est la même que celle du second déplacement.

3. Support de lentille (01) selon la revendication 1, dans lequel
M est un nombre entier supérieur à 1.

4. Support de lentille (01) selon la revendication 1 ou 3, dans lequel un écart entre la première carte de câblage (04) et la structure photosensible (02) est supérieur à une valeur prédéfinie.

5. Support de lentille (01) selon la revendication 1 ou 3, dans lequel un écart entre la première carte de câblage (04) et la structure photosensible (02) est égal à une valeur prédéfinie.

6. Support de lentille (01) selon la revendication 1 ou 3, dans lequel l'élément déformable (06) est un élément en alliage à mémoire de forme.

7. Support de lentille (01) selon la revendication 1 ou 3, dans lequel la structure photosensible (02) comprend une seconde carte de câblage (07) et un élément photosensible (08) disposé sur la seconde carte de câblage (07), et le premier côté de la structure photosensible (02) est un côté de la seconde carte de câblage (07) opposé à l'élément photosensible (08).

8. Support de lentille (01) selon la revendication 7, dans lequel la seconde extrémité de chaque élément de connexion (05) et la seconde extrémité de chaque élément déformable (06) sont connectées à la seconde carte de câblage (07).

9. Support de lentille (01) selon la revendication 7 ou 8, comprenant en outre un filtre (09) ménagé sur un second côté de la structure photosensible (02), qui est le même côté de la seconde carte de câblage (07) où l'élément photosensible (08) est situé.

10. Support de lentille (01) selon la revendication 9, comprenant en outre une structure de support (10) configurée pour supporter la lentille (00) et fixer le filtre (09).

11. Support de lentille (01) selon la revendication 10, dans lequel une épaisseur de la structure de support (10) dans la direction perpendiculaire à la direction de l'axe optique de la lentille (00) est d'environ 0,25 mm.

12. Module de lentille (11), **caractérisé en ce qu'**il comprend une lentille (00) et le support de lentille (01) selon l'une quelconque des revendications 1 à 11 et configuré pour porter la lentille (00).

13. Module de lentille (11) selon la revendication 12, dans lequel le support de lentille (01) comprend une structure de support (10), et un rayon du module de lentille (11) dans une seconde direction est une somme d'un rayon de la lentille (00) et d'une épaisseur de la structure de support (10) dans la seconde direction, la seconde direction étant perpendiculaire à la direction de l'axe optique de la lentille (00).

14. Dispositif électronique, **caractérisé en ce qu'**il comprend le module de lentille (11) selon la revendication 12 ou 13.
